# EUROPÄISCHE PATENTANMELDUNG

(11) **EP 1 258 633 A2**
(43) Veröffentlichungstag der Anmeldung: **20.11.2002**
(21) Anmeldenummer: 02018413.1
(22) Anmeldetag: 10.07.1999
(51) Int. Cl.: F02P 17/12

(54) **Verfahren zur Auswertung eines Ionenstromsignales einer selbstzündenden Brennkraftmaschine**

(30) Priorität: 22.08.1998 DE 19838222
(62) Teilanmeldung aus: 99113438.8
(71) Anmelder: DaimlerChrysler AG, 70567 Stuttgart (DE)
(72) Erfinder: Herweg, Rüdiger, Dr., 73734 Esslingen (DE); Koyanagi, Katsuyoshi, Dr., 73733 Esslingen (DE); Maly, Rudolf, Dr., 71065 Sindelfingen (DE); Münkel, Gerhard, 70734 Fellbach (DE); Renner, Gregor, Dr., 70619 Stuttgart (DE); Wilstermann, Hartung, 72631 Aichtal (DE)

(57) **Zusammenfassung**

Die vorliegende Erfindung betrifft ein Verfahren zur Auswertung eines Ionenstromsignales einer selbstzündenden Brennkraftmaschine, wobei aus dem zeitlichen Versatz eines lokalen Maximums im Verlauf des Ionenstromsignales gegenüber einem Einspritzzeitpunkt der Zündverzug abgeleitet wird. Ebenso kann eine Erkennung einer Dauereinspritzung in einem Zylinder erfolgen, indem das Ionenstromsignal integriert und hinsichtlich der Fläche bewertet wird und/oder indem die Lage und/oder Höhe der Maxima des Ionenstromsignales ausgewertet werden. Bei einer erkannten Dauereinspritzung kann die Einspritzung zumindest in den Zylinder unterbunden werden, bei dem eine Dauereinspritzung erkannt wird.

## Beschreibung

Die vorliegende Erfindung betrifft ein Verfahren zur Auswertung eines Ionenstromsignales einer selbstzündenden Brennkraftmaschine nach dem Oberbegriff des Patentanspruchs 1.

Es ist bereits ein Verfahren zur Auswertung eines Ionenstromsignales einer selbstzündenden Brennkraftmaschine bekannt (WO 86/00961), wonach eine Integration eines gemessenen Ionenstromsignales erfolgt, um beispielsweise den Rußgehalt zu bestimmen. Aus dem zeitlichen Abstand der Meßsignale soll die Drehzahl entnehmbar sein.

Es ist Aufgabe der vorliegenden Erfindung, die Auswertungsmöglichkeiten eines Ionenstromsignales zu erweitern.

Diese Aufgabe wird gelöst durch ein Verfahren nach Anspruch 1, wonach eine Erkennung einer Dauereinspritzung in einem Zylinder erfolgt, indem das Ionenstromsignal integriert und hinsichtlich der Fläche bewertet wird und/oder indem die Lage und/oder Höhe der Maxima des Ionenstromsignales ausgewertet werden.

Bei einer Dauereinspritzung zeigt sich, daß die Fläche unter dem Ionenstromsignal größer wird. Weiterhin zeigt sich, daß sich die Maxima des Ionenstromsignals verschieben und in ihrer Höhe ändern. Vorteilhaft kann also mit dem Verfahren nach Anspruch 1 eine derartige Dauereinspritzung erkannt werden.

Die Anwendung dieses Verfahrens erweist sich als besonders vorteilhaft in einem Fahrzeug mit einer selbstzündenden Brennkraftmaschine, bei der die Kraftstoffzufuhr zu den einzelnen Zylindern erfolgt, indem Kraftstoff in einem Druckreservoir gehalten wird und wobei dieses Druckreservoir über Ventile mit den einzelnen Zylindern verbindbar ist. Derartige Systeme sind als Common-Rail-Systeme bekannt. Wenn eines dieser Ventile in der geöffneten Stellung hängt, kommt es zu einer dauerhaften Kraftstoffzufuhr zu dem jeweiligen Zylinder. Vorteilhaft kann dies also mit dem Verfahren nach Anspruch 1 erkannt werden.

Weiterhin kann das Ionenstromsignal noch daraufhin ausgewertet werden, ob die Fläche unter der Kurve geringer ist als ein bestimmter Schwellwert. In diesem Fall kann geschlossen werden, daß gar keine Kraftstoffzufuhr erfolgt ist.

Bei dem Verfahren nach Anspruch 3 wird die Einspritzung zumindest in den Zylinder unterbunden, bei dem eine Dauereinspritzung erkannt wird.

Dadurch kann vorteilhaft eine Zerstörung der Brennkraftmaschine vermieden werden. Gegebenenfalls ist es zweckmäßig, zur Verbesserung der Laufruhe des Motors mehr als einen Zylinder abzuschalten.

Bei dem Verfahren nach Anspruch 4 erfolgt eine Auswertung eines Ionenstromsignales einer selbstzündenden Brennkraftmaschine, indem aus dem zeitlichen Versatz eines lokalen Maximums im Verlauf des Ionenstromsignales gegenüber einem Einspritzzeitpunkt der Zündverzug abgeleitet wird.

Das Ionenstromsignal kann entsprechend gefenstert werden, um bei der Signalauswertung lokale Maxima erkennen zu können. Es kann mit diesem Verfahren sowohl der Zündverzug bei einer Voreinspritzung als auch bei einer Haupteinspritzung erkannt werden.

Ein Ausführungsbeispiel der Erfindung ist in der Zeichnung näher dargestellt. Es zeigt dabei im einzelnen:
- Fig. 1:: den Zeitverlauf eines Ionenstromsignals und eines Einspritzsignals und
- Fig. 2-3:: verschiedene Ausführungsbeispiele von Verfahren zur Auswertung des gemessenen Ionenstromsignals.

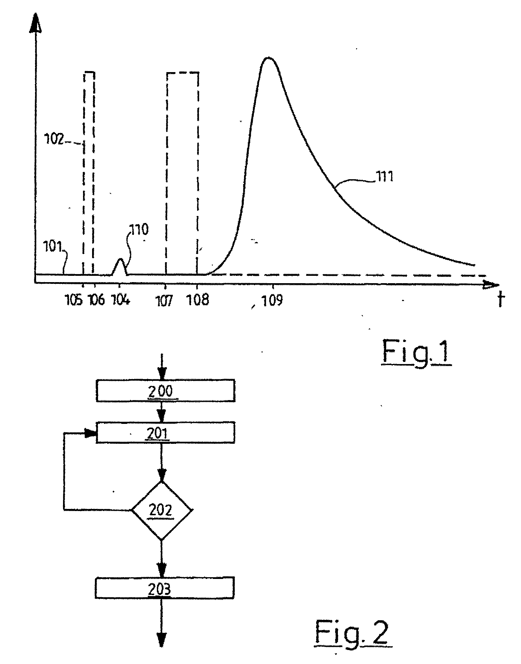

Figur 1 zeigt den Zeitverlauf eines Ionenstromsignals 101, das als durchgezogene Linie dargestellt ist, und eines Einspritzsignals 102, das als gestrichelte Linie dargestellt ist. Es zeigt sich, daß nach einer erfolgten Einspritzung mit einem gewissen Zeitversatz ein Maximum des Ionenstromsignales auftritt.

In dem Schritt 200 wird ein Zeitgeber gestartet, wenn der Beginn eines Einspritzvorganges erkannt wurde. In der Darstellung der Figur 1 entspricht dies dem Zeitpunkt 105 für die Voreinspritzung sowie dem Zeitpunkt 107 für die Haupteinspritzung.

In dem Schritt 201 wird der Zeitgeber erhöht.

In dem Schritt 202 wird dann überprüft, ob der gemessenen Ionenstrom abnimmt oder weiter zunimmt. Dies kann beispielsweise erfolgen, indem unmittelbar ein aufgenommener Meßwert mit einem vorher aufgenommenen Meßwert verglichen wird. Diese Überprüfung kann aber auch durch eine geeignete Mittelwertbildung vorgenommen werden, indem mehrere Meßwerte zusammengefaßt werden, um Fehlinterpretationen aufgrund einzelner Ausreißer in den Meßwerten zu vermeiden.

Wenn in dem Schritt 202 erkannt wurde, daß der Ionenstrom weiter zunimmt, erfolgt ein Übergang zu dem Schritt 201, in dem der Zeitgeber weiterhin erhöht wird.

Wenn in dem Schritt 202 erkannt wurde, daß der Ionenstrom abnimmt, erfolgt ein Übergang zu dem Schritt 203, in dem aufgrund des festgestellten Wertes des Zeitgebers aus der Zeitdifferenz zwischen dem Beginn des Einspritzvorganges und dem festgestellten lokalen Maximum des Ionenstromsignals der Zündverzug abgeleitet wird.

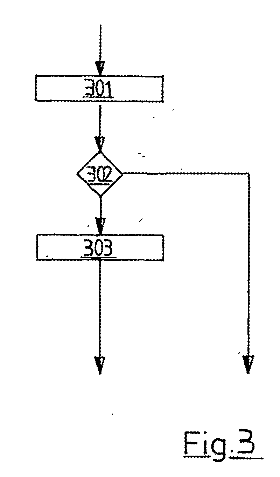

Bei der Darstellung nach Figur 3 wird in dem Schritt 301 das Ionenstromsignal integriert und hinsichtlich der Fläche bewertet und/oder die Lage und/oder Höhe der Maxima des Ionenstromsignales ausgewertet. Nach dieser Auswertung wird zumindest eine dieser Größen in dem Schritt 302 mit einem oder mehreren Sollwerten verglichen. Insbesondere wenn die Höhe der Maxima bestimmte Schwellwerte überschreitet oder wenn die Flächen unter den Kurven bestimmte Schwellwerte überschreiten, kann eine Erkennung einer Dauereinspritzung in wenigstens einem Zylinder erfolgen.

Wenn in dem Schritt 302 eine Dauereinspritzung erkannt worden ist, erfolgt ein Übergang zu dem Schritt 303, in dem die Einspritzung zumindest in den Zylinder unterbunden wird, bei dem eine Störung erkannt wurde.

Durch die Auswertung der entsprechenden Größen kann beispielsweise auch erkannt werden, wenn gar keine Einspritzung in einzelne Zylinder erfolgt.

Das Ausführungsbeispiel des Verfahrens nach Anspruch 1 erweist sich als besonders vorteilhaft bei Dieselmotoren, deren Energieversorgung realisiert wird, indem die einzelnen Zylinder bei einem Einspritzvorgang mit einem Druckreservoir verbunden werden. Derartige Systeme sind als Common-Rail-Systeme bekannt. Wenn bei einem solchen System ein Ventil hängt, kann mit dem Verfahren nach Anspruch 1 vorteilhaft eine Dauereinspritzung mit einer möglichen Schädigung der Brennkraftmaschine unterbunden werden.

## Patentansprüche

1. Verfahren zur Bestimmung einer Dauereinspritzung in einem Zylinder einer Brennkraftmaschine mittels Auswertung eines Ionenstromsignales, wobei das Ionenstromsignal integriert und hinsichtlich der Fläche bewertet wird und/oder wobei die Lage und/oder Höhe der Maxima des Ionenstromsignales ausgewertet werden (302).

2. Verfahren nach Anspruch 1,
**dadurch gekennzeichnet, daß** eine Dauereinspritzung erkannt wird, wenn das Integral des Ionenstromsignales und/oder die Höhe der Maxima des Ionenstromsignales bestimmte Schwellwerte überschreitet.

3. Verfahren nach Anspruch 1,
**dadurch gekennzeichnet, daß** die Einspritzung zumindest in den Zylinder unterbunden wird, bei dem eine Dauereinspritzung erkannt wird (303).

4. Verfahren nach Anspruch 1,
**dadurch gekennzeichnet, daß** aus dem zeitlichen Versatz (201, 202) eines lokalen Maximums (104, 109) im Verlauf des Ionenstromsignales (101) gegenüber einem Einspritzzeitpunkt (105, 107) der Zündverzug abgeleitet wird (203).

5. Verwendung eines Verfahrens nach Anspruch 1 bei einem Common-Rail-System einer Brennkraftmaschine.
